# EUROPEAN PATENT APPLICATION

(11) **EP 1 393 861 A2**
(43) Date of publication of application: **03.03.2004**
(21) Application number: 03015955.2
(22) Date of filing: 14.07.2003
(51) Int. Cl.: B25B 5/16, B25B 5/12

(54) **Clamping device for work pieces, with scraping member**

(30) Priority: 02.09.2002 IT MI20021872
(71) Applicant: Migliori, Luciano, 20124 Milan (IT)
(72) Inventor: Migliori, Luciano, 20124 Milan (IT)
(74) Representative: Coloberti, Luigi

(57) **Abstract**

A clamping device for work pieces; the device comprises a box-shaped body (10), at least one clamping member (11) protruding from the front end (12,14) of the box-shaped body (10), and sealing means (12,31,32) to prevent dirt from entering through the front end of the box-shaped body (10) and a tiltable closing member (31), having a scraping head (32) which extends between the rear longitudinal edge (11") of the clamping member (11), and a cross edge (30) of an aperture (12') for protrusion of the clamping member (11). A spring (35,37) urge the clamping member (31) to maintain the scraping head (32) constantly in contact with the rear edge (11") of the clamping member (11) during the movement.

## Description

### BACKGROUND OF THE INVENTION

This invention relates to a clamping device, for clamping work pieces, in particular for locking, centring and/or positioning sheet metal parts in the motor vehicle construction, or for other similar uses.

### STATE OF THE ART

Clamping devices are generally usued for positioning and/or centring work pieces, clamping them along edges or through appropriate holes for locking the work pieces against a shoulder surface of the clamping device, or an external supporting structure.

A clamping device of the aforementioned type, for example is described in DE -A- 39 36 396; the device comprises a box-shaped body having a longitudinal axis, and a clamping member supported by the aforesaid box-shaped body to perform a rocking and a longitudinal movement between a forward non-operative position and a backward operative position for restraining a work piece.

The clamping device is also provided with control means operatively connected to the clamping member by a thrust member sliding parallel to the longitudinal axis of the box-shaped body, an intermediate toggle-lever mechanism and an articulated lever system.

The articulated lever system, in the form of an articulated quadrilateral system which in turn comprises a first and a second connecting links supported by the box-shaped body to rotate according to respective pivotal axes, said links being connected to the clamping member by means of respective articulation axes.

The clamping member protrudes from an aperture at the front end of the box-shaped body; since the clamping member performs a rocking movement, said aperture has to be large enough compared to the dimension of the clamping member, to allow the rocking movement, thereby causing dirt and dust to penetrate inside the clamping device.

A solution of this kind involves the need to frequently carry out maintenance and cleaning operations to remove the dirt accumulated into the clamping device, in order to prevent operative problems, thereby prolonging the working life of the device.

A partial solution to this problem is proposed in DE -U- 201 00 701, which describes a clamping device comprising a box-shaped body and a clamping member moved by means of a different and more complex control system comprising a thrust member to which the clamping member is pivotally connected; the clamping member is provided with a cam shaped aperture, into which a guide pin penetrates, in such a way as to achieve the aforesaid rocking and sliding movement of the clamping member.

The clamping device also comprises two flexible thin plates inside the box-shaped body, urging against a respective longitudinal edge of the clamping member to prevent entering of the dirt.

The use of simple flexible plates still does not entirely prevent the dirt to penetrate from the front end of the box-shaped body, causing accumulation which in time could give rise to operative problems in the device.

### OBJECTS OF THE INVENTION

The object of this invention is to provide a clamping device for work pieces, of the aforementioned kind, comprising at least one clamping member, which is structurally simple and whereby it is possible to prevent the passage of dirt inside the device, thereby increasing its reliability and reducing maintenance costs.

### BRIEF DESCRIPTION OF THE INVENTION

The above can be achieved by means of a clamping device according to claim 1.

More specifically, according to the invention a clamping and positioning device for work pieces, has been provided of the type comprising:
- a box-shaped body having a longitudinal axis;
- at least one clamping member which partially protrudes from an aperture at the front end of the box-shaped body, said clamping member having fore and rear edges extending in the longitudinal direction of the box-shaped body, said clamping member being supported to perform a rocking and a sliding movement between a forward non-operative position and a backward operative position in which restrains a work piece;
- control means operatively connected to the clamping member; and
means for preventing passage of dirt through the front end aperture of the box-shaped body, said means comprising:
- a closing plate secured to the front end of the box-shaped body, said closing plate being provided with an elongated aperture for protrusion of the clamping member, said elongated aperture having fore and rear cross edges; the fore edge of the clamping member having in turn a shaped profile designed to slide in contact with one of said cross edges of the elongated aperture in the closing plate, during the movement of the clamping member;
- a tiltably supported closing member on the rear side of the elongated aperture, said closing member being provided with a scraping head which extends from the rear edge of the clamping member, towards and beyond the other one of said cross edges of the elongated aperture; and
- biasing spring means acting on said closing member to urge and constantly maintain the scraping head in contact with the rear edge of the clamping member to prevent passage of dirt.

### BRIEF DESCRIPTION OF THE DRAWINGS

These and further features according to this invention, will be more clearly evident from the following description with reference to the accompanying drawings, in which:

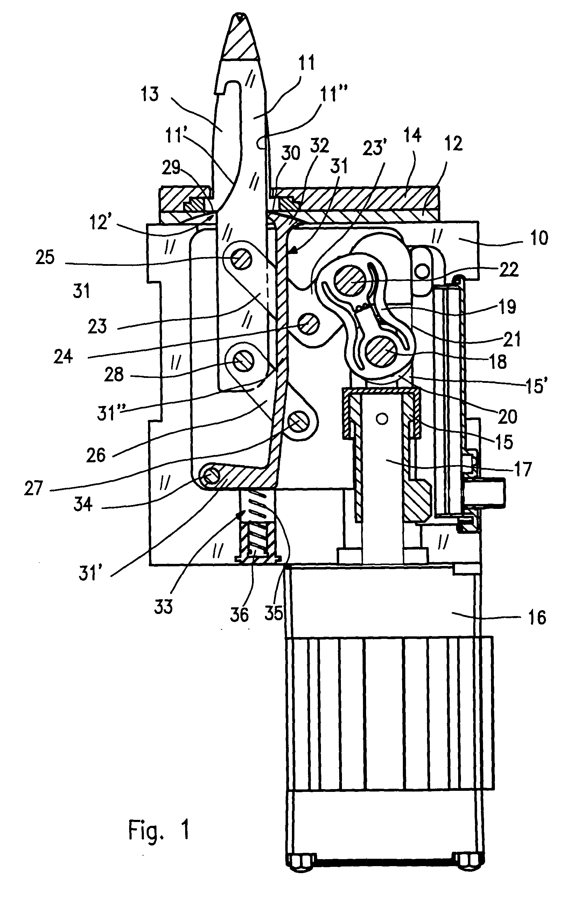

- Fig. 1 shows a longitudinal cross-sectional view of a clamping device according to the invention, having a clamping member in an advanced position disengaged from a work piece, and a centring element;

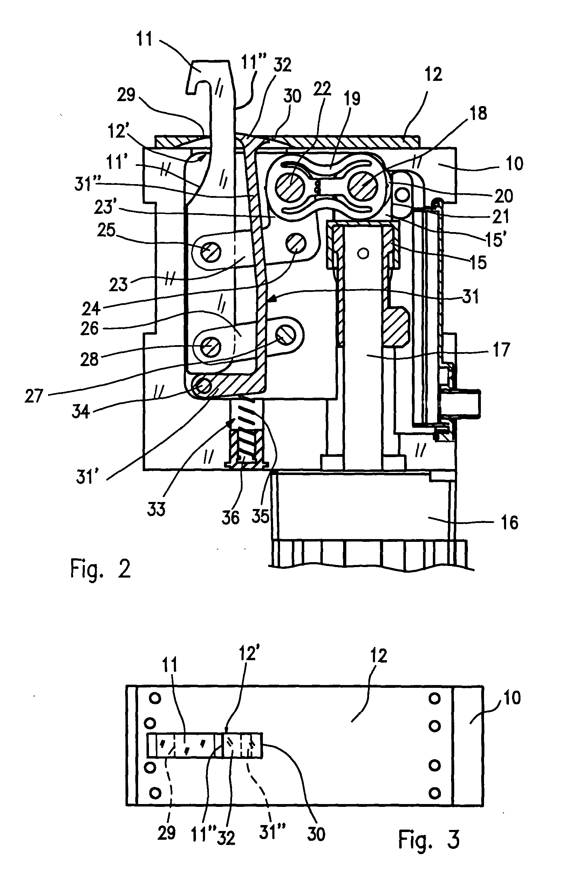

- Fig. 2 shows the clamping device of Fig. 1, with the clamping member in a retracted position in which it restrains a piece, without the centring element;
- Fig. 3 shows a top view of the device of Fig. 2;
- Fig. 4 shows a second embodiment of the clamping device according to the invention.

### DETAILED DESCRIPTION OF THE INVENTION

The general features of this invention will be illustrated hereunder by means of several embodiments.

According to a first embodiment of the invention, shown in figures from 1 to 3, the clamping device for work pieces, comprises a box-shaped body 10 having a longitudinal axis, and at least one clamping member 11, in this case one.

The clamping member 11 partially protrudes from a front end of the box-shaped body 10, and is supported to perform a rocking and a sliding movement in respect to the aforesaid longitudinal axis, between a forward or disengaged position and a backward or retracted position in which it restrains a work piece against a closing plate 12, secured to the front end of the body 10 of the clamping device.

The clamping device can be provided with a centring element 13, which can be secured to the front end of the box-shaped body 10 for example by means of a counter plate 14; in such case, the work piece is restrained in the backward position of the clamping member 11 against the aforesaid counter plate 14.

The centring element 13 is provided with a cavity for housing the clamping member 11 in its forward position, and a lateral slit from which the hook shaped end of the clamping member 11 protrudes to restrain a work piece. This is necessary, for example, whenever, in addition to the clamping function, the device must carry out a centring function for centring the work piece.

The device also comprises control means operatively connected to the clamping member 11, which in turn comprise a thrust member 15, sliding parallel to the longitudinal axis of the box-shaped body 10, operatively connected to an appropriate control member, such as for example a pneumatic or electric linear actuator 16 having a rod 17 movable with the thrust member 15, or to a manual control lever, not shown.

The thrust member 15 extends with a fork 15' to which is connected, by means of a pivot 18, an intermediate toggle rod 19, preferably of controlled elastical yielding type.

Disposed coaxially to the pivot 18 of the intermediate toggle rod 19, are guide rolls 20 movable along longitudinal guides 21 inside the box-shaped body 10.

The intermediate toggle rod 19 is in turn connected in 22 to an extension 23' of an L-shaped or first connecting link 23 of an articulated lever system, preferably in the form of an articulated quadrilateral system, supporting the clamping member 11 of the device.

In particular, the articulated quadrilateral system comprises the aforesaid first connecting link 23 supported by the box-shaped body 10 to rotate according to a first pivotal axis 24, the link 23 being in turn connected to the clamping member 11 by means of a first hinge axis 25.

The articulated quadrilateral system also comprises a second connecting link 26 supported by the box-shaped body 10 to rotate according to a second pivotal axis 27, the link 26 being connected to the clamping member 11 by means of a second hinge axis 28.

During movement, the intermediate toggle rod 19 reaches its dead centre when its pivotal and hinge points 18,22 are aligned with the contact points between the rolls 20 and the guides 21 inside the box-shaped body 10; when the clamping member 11 is disposed in a backward or retracted position for restraining a work piece, the pivot pin 18 of the intermediate toggle rod 19 comes to rest slightly beyond its dead centre, in a condition of irreversibility, thereby preventing the accidental disengagement of the work piece caused by any external force.

The clamping device also comprises sealing means to prevent the entrance of dirt through the front end of the box-shaped body 10; the sealing means comprise the aforesaid closing plate 12, which is provided with an elongated aperture 12' for protrusion of the clamping member 11, said aperture 12' having a first and a second cross edges 29,30 at the fore and rear sides.

The clamping member 11 has in turn a fore edge 11' and a rear edge 11'' which extend in the direction of the longitudinal axis of the box-shaped body 10.

The fore longitudinal edge 11' of the clamping member 11 has a shaped profile designed to slide in contact with a first cross edge at the fore side of the elongated aperture 12'in the closing plate 12, during the rocking and sliding movement of the clamping member 11; the profile of the fore edge 11' in particular will be defined in relation to the movement of the clamping member 11, in turn determined in relation to the position of the pivotal and hinge points 24,25,27,28 of the aforesaid articulated quadrilateral system.

The sealing means also comprise a closing member 31, for the aperture 12', tiltably supported in this case in the box-shaped body 10; the closing member 31 is provided with a scraping head 32 which extends from the rear longitudinal edge 11" of the clamping member 11 towards and beyond the second cross edge 30 of the elongated aperture 12' for protrusion of the clamping member 11.

The scraping head 32 of the closing member 31 is urged and constantly maintained in contact with the rear edge 11" of the clamping member 11 by a biasing spring means 33 acting on the closing member 31.

The closing member 31 preferably comprises an L-shaped lever having a first arm 31' pivoted in 34 to the box-shaped body 10, and a second arm 31'' which extends in the direction of the longitudinal axis of the box-shaped body 10, ending at its upper end with the scraping head 32.

The spring means 33 comprise a spring member 35 disposed between the first arm 31' of the closing member 31 and a seat 36 for housing the spring member 35 in the box-shaped body 10.

The elongated aperture 12' of the closing plate 12 preferably is provided with fore and rear sharped edges 29,30 to limit the frictional forces due to the sliding movement of the clamping member 11.

The scraping head 32 of the closing member 31 is preferable T-shaped and has an upper rounded surface sliding along a corresponding arched lower surface of the closing plate 12, so as to ensure a more efficient seal against dirt.

Moreover, in correspondence with the point 34 in which it is pivoted to the box-shaped body 10, the arm 31' of the closing member 31 defines a stop for the clamping member 11 in its backward or retracted position.

The pivotal point 34 of the closing member 31 is preferably positioned rearwardly to the aforesaid articulated quadrilateral system, with respect to the direction of the longitudinal axis of the box-shaped body 10.

The clamping device according to the invention consequently enables a reduction in maintenance costs and offers greater reliability, due to the fact that the scraping head 32 of the closing member 31 prevents the passage of dirt inside the box-shaped body 10.

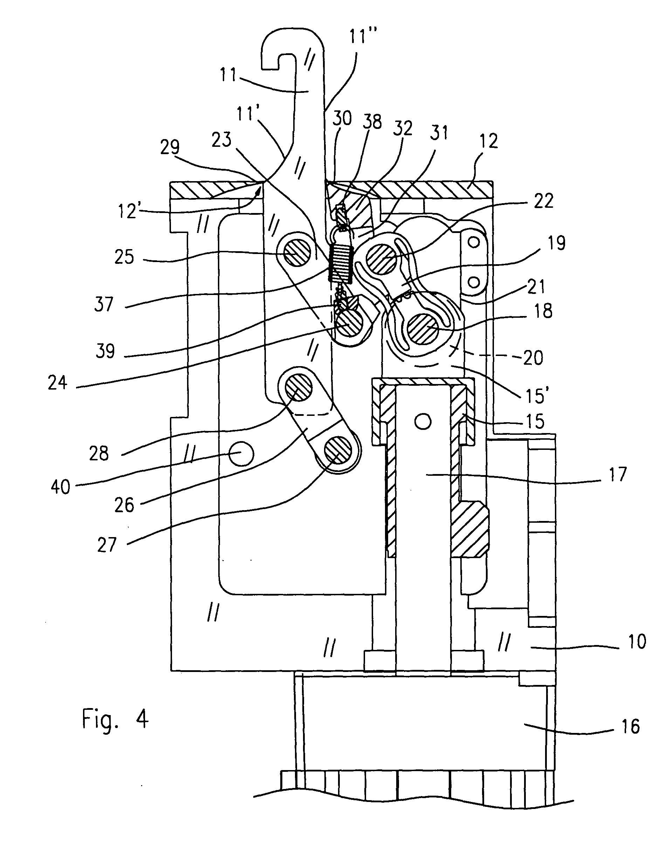

A second embodiment of the clamping device according to the invention is shown in figure 4, in which the same reference numbers have been used to indicate similar or equivalent parts.

This embodiment of the clamping device differs from the previous one in that the closing member 31 is pivoted coaxially to one of the connecting links 23,26 of the articulated quadrilateral system, in this case to the first connecting link 23; moreover, the scraping head 32 of the closing member 31 is maintained in contact with the rear edge 11" of the clamping member 11 by a tensioning spring 37 connected between the scraping head 32 and the connecting link 23 of the articulated quadrilateral system, for example by means of two respective hooks 38,39.

The device comprises a stop element 40 to stop the clamping member 11 in its backward position, secured to the box-shaped body 10.

According to a further embodiment of the invention, the clamping device may comprise a first and a second opposite clamping members, each having a longitudinal fore edge designed to slide in contact with a respective cross edge of the elongated aperture 12' of the closing plate, and a rear longitudinal edge.

The device also comprises a closing member coplanary arranged to each clamping member, each closing member having a scraping head constantly maintained in contact, by means of relevant spring, with the rear longitudinal edge of the respective clamping member.

In this way it is possible to prevent the infiltration of dirt into the box-shaped body also whenever there are several clamping members.

What has been described and shown with reference to the accompanying drawings, has been given purely by way of example in order to illustrate the general principle of the invention, and some preferential embodiments; consequently, other modifications and variations to the clamping device are possible, without thereby departing from the scope of the claims.

## Claims

1. A clamping device for work pieces, of the type comprising:
- a box-shaped body (10) having a longitudinal axis;
- at least one clamping member (11) which partially protrudes from an aperture (12') at the front end of the box-shaped body (10), said clamping member (11) having fore and rear edges (11', 11'') extending in the longitudinal direction of the box-shaped body (10); said clamping member (11) being supported to perform an rocking movement and a sliding movement between a forward non-operative position and a backward operative position in which it restrains a work piece; and
- control means (16, 19) operatively connected to the clamping member (11),
**characterised by** comprising sealing means (12,31,32) for preventing the infiltration of dirt through the front end of the box-shaped body (10), said sealing means (12,31,32) comprising:
- a closing plate (12) secured to the front end of the box-shaped body (10), said closing plate (12) having an elongated aperture (12') for protrusion of the clamping member (11), said aperture (12') having first and second cross edges (29,30);
- said clamping member (11) having the fore edge (11') provided with a shaped profile designed to slide in contact with one of said cross edges (29) of the elongated aperture (12') in the closing plate (12);
- a tiltably supported closing member (31) for said aperture (12'), said closing member (31) being provided with a scraping head (32) extending from the rear longitudinal edge (11'') of the clamping member (11), towards and beyond the other one (30) of said cross (29, 30) edges; and
- biasing spring means (35,37) urging said closing member (31) to maintain the scraping head (32) constantly in contact with the rear edge (11") of the clamping member (11).

2. A clamping device according to claim 1, **characterised in that** said closing member (31) comprises an L-shaped lever having a first arm (31') pivoted to the box-shaped body (10), and a second arm (31'') which extends in the direction of the longitudinal axis of the box-shaped body (10), said second arm (31") ending with said scraping head (32).

3. A clamping device according to claim 2, **characterised in that** the spring means (35,37) comprise a spring element (35) disposed between the first arm (31') of the closing member (31) and a seat (36) in the box-shaped body (10).

4. A clamping device according to claim 1, **characterised in that** the elongated aperture (12') in the closing plate (12), is provided with sharped cross edges (29, 30).

5. A clamping device according to claim 1, **characterised in that** the closing member (31) is provided with a T-shaped scraping head (32) having an upper rounded surface sliding along a corresponding arched surface at the bottom of the closing plate (12).

6. A clamping device according to claim 2, **characterised in that** the pivot point (34) to the box-shaped body (10) of the closing member (31), defines a stop for the clamping member (11) in its backward position.

7. A clamping device according to claim 1, **characterised in that** the clamping member (11) is supported by an articulated lever system, operatively connected to said control means.

8. A clamping device according to claim 1, **characterised in that** the articulated lever system is in the form of an articulated quadrilateral system comprising first and second connecting links (23,26), pivotally supported by the box-shaped body (10).

9. A clamping device according to claim 8, **characterised in that** the closing member (31) is pivoted rearwwardly to the articulated quadrilateral system, with respect to the longitudinal axis of the box-shaped body (10).

10. A clamping device according to claim 8, **characterised in that** the closing member (31) is pivoted coaxially to one of said connecting links (23), the scraping head (32) of said closing member (31) being maintained in contact with the rear edge (11'') of the clamping member (11) by a tensioning spring (37) connected between the scraping head (32) and the aforesaid one connecting link (23).

11. A clamping device according to claim 10, **characterised by** comprising a stop element (38) for the clamping member (11) in its backward position.

12. A clamping device according to claim 1, **characterised by** comprising first and second opposite clamping members, each having a fore longitudinal edge designed to slide in contact with a respective cross edge of the elongated aperture (12') in the closing plate (12), and a rear longitudinal edge; and
a closing member (31) coplanary arranged to each clamping member (11), each closing member (31) having a scraping head (32) and spring means (35) to urge said scraping head (32) against the rear edge of the respective clamping member (11).
